# EUROPEAN PATENT SPECIFICATION

(11) **EP 2 103 415 B1**
(45) Date of publication and mention of the grant of the patent: **27.03.2019**
(21) Application number: 07704772.8
(22) Date of filing: 18.01.2007
(51) Int. Cl.: B29C 49/10, B29C 49/48, B29C 57/02, B29C 49/00, B29K 105/00, B29L 23/00

(54) **SYSTEM FOR PRODUCING INTEGRAL OPENINGS FOR BIAXIALLY ORIENTED PLASTIC PIPES**
SYSTEM ZUR HERSTELLUNG VON INTEGRALEN ÖFFNUNGEN FÜR BIAXIAL ORIENTIERTE KUNSTSTOFFROHRE
SYSTÈME DE FABRICATION D'EMBOUCHURES INTÉGRÉES POUR DES CONDUITES EN PLASTIQUE À ORIENTATION BIAXIALE

(43) Date of publication of application: 23.09.2009
(73) Proprietor: Molecor Tecnología S.l., 28529 Madrid (ES)
(72) Inventor: MUÑOZ DE JUAN, Ignacio, E-28529 Madrid (ES)
(74) Representative: Pons Ariño, Angel
(86) International application number: PCT/ES2007/070010
(87) International publication number: WO 2008/087235

(56) References cited:
- EP-A1- 0 700 771
- EP-A2- 1 728 617
- DE-A1- 1 924 557
- DE-A1- 4 344 798
- ES-T3- 2 132 365
- US-A- 3 160 130
- US-A- 3 929 958

## Description

The present invention relates to a system for the integral manufacturing of sockets in oriented pipes, with the possibility of regulating and distributing the thicknesses at will of the socket, making it possible to reinforce the traditionally weakest areas, without increasing the times of the manufacturing process and with optimum energy efficiency.

The object of the invention is to form the sockets with housing for gasket seals in a pipe of molecularly oriented plastic material, integrated within the actual production of discontinuous systems.

The invention is included within the field of manufacturing processes of molecularly oriented profiles, in particular within discontinuous systems.

### BACKGROUND OF THE INVENTION

Molecular orientation is a process whereby, applying a mechanical deformation to a previously extruded pipe or blank, in suitable temperature, pressure, deformation speed and deformation radius conditions principally, a substantial modification of its mechanical properties is produced, principally the sigma of the material, impact resistance, creep improvement, resistance to crack propagation, Young's module, etc.

With said molecular orientation process, an ultraresistant pipe is produced, with less raw material and with identical or superior features, thanks to the better resistance of the material.

There are various methods or systems for the manufacturing of tubular profiles, which can be grouped in two large categories: Continuous or line systems and discontinuous systems.

Principally, discontinuous systems are based on producing the molecular orientation "element by element", which is achieved by an expansion of the blank within a mould which provides the definitive shape of the tubular profile.

Line processes are radically different and the orientation occurs continuously and simultaneously at the actual extrusion, there being no interruption in the process, nor intermediate stock, etc.

Oriented pipes should be joined together to form the conduction line and can do so in two ways: by sleeves, which are independent interconnection parts which are made on tubes with constant, circular section, or by the formation of a socket in each pipe which makes it possible to insert one end with a pipe within another, each pipe having its two different ends, one smooth and another with the form of socket, and thus it constitutes the line, so that in this socket there is sufficient space to house a gasket seal of flexible material, which ensures a hermetic closure of the network.

The continuous or line processes, due to their nature, require that the socket process is a process separate from that of the orientation, for which purpose special machines are required which in a later phase than that of the orientation make the socket.

EP 0700771 A1, US 3929958 A and US 3160130 A are examples of processes which use auxiliary machinery or tools in order to produce sockets in pipes after the orientation phase.

In EP 0700771 A1, a pressurized-fluid workhead is used for permanent bell-forming end portions of plastic pipes. The process disclosed in this document describes how the pipes are associated to special workheads which combine shaped buffers with forming chambers to heat-form the pipe, cooling it inside the workhead in order to render the belling permanent.

In US 3929958 A, a process for producing radially-expanded socket ends on thermoplastic pipe lengths is disclosed, the object is achieved by fashioning the heated end of a pipe over a shape conferring means using a mould for producing an internal radially expanded peripheral groove.

US 3160130 A discloses a method and apparatus for manufacturing hollow articles by expansion of elongate hollow rigid blanks, the method consists in deforming the blank starting at one end, or at an area close to one end, and proceeding along its length. The deformation is achieved by the use of forces, special attention is paid during the process to the amount, rate and location of the deformation caused by those forces. The document also describes the control of those deformations during the process.

Discontinuous processes permit that the socket can be performed integrally, i.e. it is formed at the same time as the pipe is formed, or made similarly to the aforementioned, as a process external to that of the pipe orientation.

Numerous patent documents are known for the performance of non-integral sockets, as an extra process, the following being representative: In WO 02/09926 A1, which develops a heating system of the oriented pipe by water, the heating zone is limited with two caps so that once heated and under pressure the pipe is formed against a stamp which provides the shape. Subsequently, the blank is cooled and the water is extracted. The system described in this document permits good temperature regulation, but it is very slow and lacks a thickness control.

Likewise, EP 0930148 A1 discloses that in the heating a machine is established which heats the zone to form the pipe, at a temperature similar to that of the orientation. Subsequently, a sharp expansion element is inserted, which causes that the heated material in plastic state forms against the silhouette of this expansion element, to be then cooled under the temperature of the plastic-solid transition. Once cooled, the parts forming the rubber seal are retracted, until the expansion element has a constant sector, and this element exits the interior of the already formed pipe.

Within the systems for the making of integrated seals, further reference is made to documents US 4340344 A, WO 98/56567 A1 and WO 90/15949 A1. In all cases, the system consists of, at one end of the mould, a cavity is made where on expanding the pipe, a part of the pipe expands on this section, giving rise to the socket, it subsequently being cooled by contact of the pipe metal on the mould.

Due to the fact that it starts from a blank of constant section, when the socket is produced, in the zones where the expansion is greater, since the final diameter attained is greater, a thinning of the pipe wall formed logically occurs, since the same quantity of material should be distributed over a greater surface. This part coincides with the upper part of the housing of the seal, since it is precisely the part that should bear more axial loads, and is more sensitive to on site impacts or accidents. In short, the part which should be the strongest, due to natural motives of the process is, in terms of thickness, the weakest. In other words, the upper part of the blank, by its upper diameter, is thinned after the production of the socket, the same as the profile in general, due to its greater diameter with respect to the constant section of the pipe.

This phenomenon, common to all systems, constitutes an authentic problem, since it is not only the weak point of the pipe, but due to the fact that the regulation requires minimum thicknesses at any point of the pipe. This thinning makes it sometimes necessary to have to thicken the whole pipe, with the extra use of non-productive raw material, only to comply with said standard in said point of the socket.

The machines that form the socket independently try to smooth this effect as far as possible, but in no case do they resolve the problem definitively.

Furthermore, said machines are very expensive and costly, the operation being very expensive in terms of the investments necessary for their execution, and the processing times should also be taken into consideration which are slow, a bottleneck possibly occurring in the operations.

### DESCRIPTION OF THE INVENTION

The present invention proposes a simple system according to claim 1 which resolves the aforementioned problem, being based on means which, coupled to one of the closures of the mould or head permit the integral production of the socket, providing the important novelty of being able to distribute thicknesses at will within the socket profile, even achieving that the traditionally thinnest part of that profile, due to the nature of the process, comes to be, if desired, thicker and reinforced.

Further preferred embodiments are claimed in the dependent claims.

In accordance with the system of the invention thickness regulation is achieved within the integral socket process, including the following means:
A central support body, which is provided to join to the body of the pipe orientation mould.

A coaxial sliding part or slide block with conical form, which slides axially, being primarily advanced when forming the socket to progressively remove backwards

Means of heating incorporated in said sliding part or slide block, for the heating thereof, it being possible that said means are electric means of heating, or based on the circulation of a hot fluid or appropriate system, whose purpose is to maintain the slide block at the orientation temperature.

Small orifices in said slide block or sliding part to permit the intake of lubricant and facilitate the sliding of the plastic on the slide block, so that said heating means and said orifices determine auxiliary means which permit the conditioning of the parts of the system unit for its optimum behaviour.

Mechanical grippers which fix the plastic pipe so that it does not move during the orientation or expansion.

A slide rod which pushes the blank forward, so that this rod is initially behind and when the orientation process starts, it moves axially in opposite direction to the slide block. Said rod is equipped with an axial and central orifice which permits the passage, via intake or outlet, of fluids both for the expansion process and for the cooling process, so that it is possible to project cooling fluid through said orifice of the rod, even with interior pressure.

Said moving elements, both rod and slide block, as well as grips, are moved by actuators of any type of axial shape, it being possible that they are cylinders, threaded systems, etc.

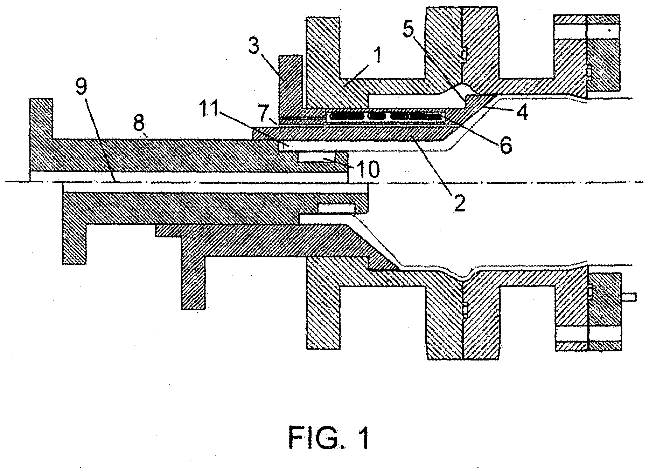

### DESCRIPTION OF THE DRAWING

A single page of drawings is attached as an integral part of said description, wherein a longitudinal sectional view of the elements and parts comprising the system of the invention has been represented.

### PREFERRED EMBODIMENT OF THE INVENTION

In the figure, it can be verified how the system comprises, in first place, a support body (1) designed to be coupled to the head of the corresponding mould of pipe molecular orientation, and wherein will be performed the formation of the socket of the plastic pipe which is introduced in said mould. Through the inside of said support body (1) is mounted, with ease of axial displacement, a coaxial and sliding slide block (2) with a rear flange (3) as means of limiting of the sliding towards the inside of said slide block (2) on the body (1), a slide block (2) which has its inner end of conical shape (4) in accordance with the inner surface, whilst on the outer surface it has a step (5) as limit of maximum displacement towards the exterior of the support body (1).

Said slide block (2) incorporates heating elements (6) such as electrical resistances, although they may be determined by a circulation of hot fluid or any other suitable means or system, their purpose being to heat the slide block (2) to keep it at the temperature of orientation and formation of the socket.

Likewise, on the slide block (2) small orifices (7) have been provided to permit the intake of a lubricating fluid which will facilitate the sliding of the slide block, all of this so that said heating elements (6) and orifices (7) constitute means of conditioning of the other system components, for their optimum behaviour, i.e. a homogeneous distribution, reduction in forces, avoiding creases or scratches in the plastic and facilitating sliding.

On the other hand, the system also comprises a slide rod (8) designed to push the blank (11) or plastic pipe forward, inside the mould, said rod (8) being affected by an axial and central orifice (9) for the passage, intake or outlet, of the flows provided for the expansion of the blank (11) and for its cooling.

Said rod (8) incorporates at its inner end, means (10) of fastening of the blank or plastic pipe (11) preferably constituted by mechanical grips whose function is to prevent the plastic pipe (11) from moving during the orientation or expansion process.

In accordance with the aforementioned, the operation according to the system of the invention is as follows:
Initially, the system is as appears in the figure, in accordance with the upper part of the shaft, with the slide block (2) forward and the rod (8) backward, the grips (10) holding the blank or plastic pipe (11) which has expanded and oriented in its mould, for which reason the plastic adapts to the resulting cavity, as reflected in said figure, due to the pressure existing inside the mould.

When it is decided to make the socket, the slide block (2) moves backward slowly, allowing the plastic or blank (11) to adapt to the resulting cavity, which is done regularly and smoothly, since the slide block (2) is heated to a temperature identical to that of the blank (11), it being possible to lubricate said slide surface by the fluid that may be introduced via the orifices (7) provided in the slide block (2).

Creases do not occur as the inner pressure is kept constant, pushing the plastic against the mould walls.

Simultaneously, the rod (8) starts advancing in the opposite direction to that of displacement of the slide block (2), pushing the blank (11) and providing that material to the overall expansion. With the due ratio of speeds between the rod (8) and slide block (2), it regulates where one wants to position that contribution of material, preferably in the area of maximum diameter, but being able to regulate at will always with the due ratio of speeds and displacements. Logically, to achieve thickening, the speed of the rod (8) should be increased, reducing that of the slide block (2), or both, doing the opposite to thin the areas.

Once the process has concluded, the blank (11) is cooled with a cooling fluid which is introduced through the orifices (9) of the rod (8), whilst maintaining the interior pressure.

Once the blank (11) is cooled, the central orifice (9) of the rod (8) is connected to the atmosphere so that a depressurization occurs, and from there the pipe is extracted with its formed socket. There only remains to carry out the finish of the socket performing the cutting of the excess material, cleaning, placement of the gasket seal and packaging.

## Claims

1. System for the manufacturing of integrated sockets in biaxially oriented plastic pipes which, being provided for its coupling to a mould for molecular orientation of pipes, with housing for gasket seals allowing to form the socket of the plastic pipe, comprising:
a support body (1) to carry out the coupling to the mould,
a coaxial slide block (2) sliding axially inside said support body (1),
a slide rod (8) for pushing against the direction of extrusion of the blank or plastic pipe (11) sliding axially within the slide block (2),
wherein
said sliding rod (8) is provided with an axial and central orifice (9) for the intake and outlet of fluids and with means of fastening (10) for immobilising the blank or plastic pipe (11) in the orientation or expansion process thereof,
**characterized in that**
said slide block (2) having the inner end with an outer conical configuration (4) and being provided with means of heating (6) of the slide block (2), and with small orifices (7) made axially in the latter for the intake of a lubricating fluid,
the system being further **characterized in that** it further comprises actuators that provide the axial displacement of the slide block (2) and slide rod (8) such that the ratio of speeds between them means that the thicknesses of the socket to form can be distributed at the convenience of the operator during the expansion and distribution of the material of the blank.

2. System for the manufacturing of integrated sockets in biaxially oriented plastic pipes, according to claim 1, **characterized in that** the means of heating (6) can be electrical or based on a circulation of hot fluid.

3. System for the manufacturing of integrated sockets in biaxially oriented plastic pipes, according to any of the preceding claims, **characterized in that** the slide block (2) has limiting means (3, 5) limiting the forward and backward displacement inside the support body (1).

4. System for the manufacturing of integrated sockets in biaxially oriented plastic pipes, according to any of the preceding claims, **characterized in that** the means of fastening (10) are constituted by mechanical grips.

## Patentansprüche

1. System zur Herstellung integrierter Stutzen in biaxial orientierten Kunststoffrohren, die für ihre Kopplung an ein Formwerkzeug zur Molekularorientierung von Rohren mit einer Aufnahme für Dichtungen versehen sind, um die Bildung des Stutzens des Kunststoffrohrs zu ermöglichen, umfassend:
einen Trägerkörper (1) zum Durchführen der Kopplung an das Formwerkzeug,
einen koaxialen Schiebeblock (2), der innerhalb des Trägerkörpers (1) axial verschoben wird,
eine Schiebestange (8) zum Schieben gegen die Extrusionsrichtung des Rohlings oder Kunststoffrohrs (11), der/das innerhalb des Schiebeblocks (2) axial verschoben wird,
wobei
die Schiebestange (8) mit einer axialen und mittigen Öffnung (9) zum Ein- und Auslass von Fluiden und mit Befestigungsmitteln (10) zur Fixierung des Rohlings oder Kunststoffrohrs (11) im Orientierungs- oder Expansionsprozess davon versehen ist,
**dadurch gekennzeichnet, dass**
der Schiebeblock (2) ein inneres Ende mit einer konischen Außenform (4) aufweist und mit Heizmitteln (6) des Schiebeblocks (2) und mit kleinen Öffnungen (7) versehen ist, die im Letzteren für den Einlass eines Schmierfluids axial ausgeführt sind,
wobei das System ferner **dadurch gekennzeichnet ist, dass** es ferner Betätigungselemente umfasst, welche die axiale Verschiebung des Schiebeblocks (2) und der Schiebestange (8) bereitstellen, derart dass das Verhältnis von Geschwindigkeiten zwischen ihnen bedeutet, dass die Dicken des zu bildenden Stutzens während der Expansion und Verteilung des Materials des Rohlings nach dem Ermessen des Bedieners verteilt werden können.

2. System zur Herstellung integrierter Stutzen in biaxial orientierten Kunststoffrohren nach Anspruch 1, **dadurch gekennzeichnet, dass** die Heizmittel (6) elektrisch sein oder auf einem Kreislauf von heißem Fluid basieren können.

3. System zur Herstellung integrierter Stutzen in biaxial orientierten Kunststoffrohren nach einem der vorhergehenden Ansprüche, **dadurch gekennzeichnet, dass** der Schiebeblock (2) Begrenzungsmittel (3, 5) aufweist, welche die Vorwärts- und Rückwärtsverschiebung innerhalb des Trägerkörpers (1) begrenzen.

4. System zur Herstellung integrierter Stutzen in biaxial orientierten Kunststoffrohren nach einem der vorhergehenden Ansprüche, **dadurch gekennzeichnet, dass** die Befestigungsmittel (10) aus mechanischen Greifelementen bestehen.

## Revendications

1. Système de fabrication d'emboîtures intégrées dans des conduits en plastique à orientation biaxiale qui, étant prévu pour son couplage à un moule pour l'orientation moléculaire de conduits, avec un logement pour les joints d'étanchéité permettant de former l'emboîture du conduit en plastique, comprend :
un corps de support (1) pour réaliser le couplage au moule,
un bloc coulissant coaxial (2) coulissant axialement à l'intérieur dudit corps de support (1),
une tige coulissante (8) pour pousser contre le sens d'extrusion de l'ébauche ou conduit en plastique (11) coulissant axialement dans le bloc coulissant (2),
dans lequel
ladite tige coulissante (8) est pourvue d'un orifice axial et central (9) pour l'entrée et sortie de fluides et avec des moyens de serrage (10) pour immobiliser l'ébauche ou conduit en plastique (11) dans le procédé d'orientation ou d'expansion de celui-ci,
**caractérisé en ce que**
ledit bloc coulissant (2) ayant l'extrémité interne avec une configuration conique externe (4) et étant pourvu de moyens de chauffage (6) du bloc coulissant (2), et avec de petits orifices (7) réalisés axialement dans ce dernier pour l'entrée d'un fluide lubrifiant,
le système étant **caractérisé en outre en ce qu'**il comprend en outre des vérins qui fournissent le déplacement axial du bloc coulissant (2) et de la tige coulissante (8) de sorte que le rapport de vitesses entre eux signifie que les épaisseurs de l'emboîture à former peuvent être réparties à la convenance de l'opérateur pendant l'expansion et la répartition du matériau de l'ébauche.

2. Système de fabrication d'emboîtures intégrées dans des conduits en plastique à orientation biaxiale, selon la revendication 1, **caractérisé en ce que** les moyens de chauffage (6) peuvent être électriques ou basés sur une circulation de fluide chaud.

3. Système de fabrication d'emboîtures intégrées dans des conduits en plastique à orientation biaxiale, selon l'une quelconque des revendications précédentes, **caractérisé en ce que** le bloc coulissant (2) a des moyens de limitation (3, 5) limitant le déplacement avant et arrière à l'intérieur du corps de support (1).

4. Système de fabrication d'emboîtures intégrées dans des conduits en plastique à orientation biaxiale, selon l'une quelconque des revendications précédentes, **caractérisé en ce que** les moyens de serrage (10) sont constitués de pinces mécaniques.
